# EUROPEAN PATENT APPLICATION

(11) **EP 3 858 522 A1**
(43) Date of publication of application: **04.08.2021**
(21) Application number: 20154768.4
(22) Date of filing: 31.01.2020
(51) Int. Cl.: B23B 27/10, B23B 27/20, B23B 27/14

(54) **A CUTTING INSERT FOR A CUTTING TOOL**

(71) Applicant: Seco Tools AB, 737 82 Fagersta (SE)
(72) Inventor: LARSSON-FRITZ, Stefan G, SE-737 82 Fagersta (SE); BITE, Ingemar, SE-737 82 Fagersta (SE)
(74) Representative: Sandvik

(57) **Abstract**

A cutting insert (1) for a cutting tool, said cutting insert (1) comprising a body (2) and a tip (3) attached to the body (2), wherein the body (2) comprises a recess (9) configured for receiving the tip (3), wherein said tip (3) comprises an upper side (12) comprising a top surface (13) and includes at least one cutting edge (17a, 17b) of the cutting insert (1). The cutting insert (1) comprises at least one cooling channel (18, 19, 20, 20b, 20c) which extends through said body (2) and which has at least one outlet (21, 22, 23) in a sidewall surface (11) that extends beyond the top surface (13) of the tip (3), and the outlet (21, 22, 23) is directed such that a fluid exiting the body (2) through said outlet (21, 22, 23) will be directed towards the top surface (13) of the tip (3).

## Description

### TECHNICAL FIELD

The present invention relates to a cutting insert for a cutting tool, said cutting insert comprising a body and a tip including a cutting edge and which is attached to the body, wherein the body has a recess in which the tip is positioned, and the recess is defined by at least a bottom surface and a sidewall surface, and the tip is supported by the bottom surface and a first portion of the sidewall surface of the recess, and said sidewall surface is remote from said cutting edge and has a second portion extending from a top surface of the tip to a top surface of the body.

Typically, the cutting insert is configured for the cutting of metals.

### BACKGROUND

Cutting inserts of the type mentioned above are well known, for example from JP 2019018294A. Typically, the body of such cutting inserts is made of a sintered cemented carbide, such as tungsten carbide with a cobalt binder. The tip is of a material which is substantially harder than the material of the body, and may comprise polycrystalline diamond (PCD) or polycrystalline cubic boron nitride (PcBN). Typically, the tip is attached to the body by means of brazing. Such cutting inserts are often used for cutting applications that generate very high temperatures in the region of the cutting edge and rake face of the insert. Therefore, cooling of the insert, in the region of the tip, is essential for the lifetime of the insert. Typically such cooling is achieved by ejection of a cooling liquid by means of an external nozzle or the like, directed towards the cutting insert. However, it is complicated to achieve efficient cooling and precise direction of the cooling liquid to exactly the region of the cutting insert that is most in need of such cooling, i.e. the region of the cutting edge.

It is an objective of the present invention to present a cutting insert as defined hereinabove, said cutting insert having a design the promotes the lifetime thereof, thereby making the cutting insert suitable for extremely heat-generating cutting applications.

### SUMMARY

The objective of the present invention is achieved by means of a cutting insert for a cutting tool, said cutting insert comprising:
- a body and a tip attached to the body,
- wherein the body comprises
   an upper side comprising a top surface, a lower side comprising a bottom surface, a peripheral side surface extending between the upper side and the lower side, and a recess configured for receiving the tip, wherein the recess is formed in a transition between the top surface and the peripheral side surface, wherein the recess is defined by at least a bottom surface and a sidewall surface,
- wherein the tip is made of a material different from the material of said body, and
- wherein said tip comprises an upper side comprising a top surface, a lower side comprising a bottom surface, and a peripheral side surface extending between the upper side and the lower side, and wherein the intersection between the top surface and the peripheral side surface defines at least one cutting edge of the cutting insert,
- wherein the tip is supported by the bottom surface and a first portion of the sidewall surface of the recess, and
- said sidewall surface is remote from said cutting edge and has a second portion extending in a direction from the top surface of the tip to the upper side of the body, said cutting insert being **characterized in** that it comprises
- at least one cooling channel which extends through said body and which has at least one outlet in said second portion of the sidewall surface, and that the outlet is directed such that a fluid exiting the body through said outlet will be directed towards the top surface of the tip.

The cutting insert is thus configured to be held by a holder through which a pressurized cooling fluid, preferably a cooling liquid, is introduced into the cutting insert and guided by the cooling channel to the at least one outlet, from which it is ejected towards the top surface of the tip. No external nozzle or the like that requires a precise position in order to eject a cooling fluid to the surface of the tip is thus needed. The internal cooling channel will guarantee a very precise direction of the ejected fluid.

According to one embodiment, a center axis of the outlet intersects the top surface of the tip. Accordingly, provided that the pressure of the cooling fluid is sufficient, the cooling fluid will always hit the top surface of the tip irrespective of the position of the cutting insert and the effect of the gravitational force on the ejected fluid. According to one embodiment, said at least one outlet is directed such that a fluid exiting the body through said outlet is directed towards said at least one cutting edge on the tip. Typically, the region of the cutting edge, and the rake face close to the cutting edge, is most subjected to heat generation. Directing the cooling fluid to the region of the cutting edge is therefore advantageous.

According to one embodiment, said top surface of the tip defines a rake face of the cutting insert.

According to one embodiment, the tip defines a corner with a first and a second cutting edge extending from said corner, and that at least one outlet has a center axis pointing towards said corner such that fluid exiting the body through the outlet is directed towards said corner.

According to one embodiment, said cooling channel comprises a first portion having a cross-sectional area A, and a second portion comprising at least two branches having a respective cross-sectional area aᵢ and extending from the first portion to a respective outlet in said second portion of the wall surface, and that the cross-sectional area A of said first portion is larger than the sum Σaᵢ of the cross-sectional areas of the branches. Thereby, a pressure increase is provided for in the branches leading to the outlets, providing for a precise direction of the ejected fluid, irrespective of the position of the cutting insert.

According to one embodiment, the cooling channel comprises a plenum chamber provided between said first portion and the branches, said plenum chamber having a cross-sectional area Apc which is larger than the cross-sectional area A of said first portion. The provision of a plenum chamber further increases the pressure increase in the branches departing therefrom to the outlets.

According to one embodiment, the cutting insert comprises a joint between the tip and the body, said joint being formed by a brazing material.

According to one embodiment, the material of the tip has a higher hardness than the material of the body.

According to one embodiment, the body comprises cemented carbide. According to one embodiment, the cemented carbide comprises tungsten carbide with a cobalt binder.

According to one embodiment, the tip comprises polycrystalline diamond (PCD) or polycrystalline cubic boron nitride (PcBN).

According to one embodiment, the at least one cooling channel has an inlet configured to receive a cooling fluid from a cooling fluid source. The cooling fluid source may comprise a cutting tool holding the cutting insert, wherein the cutting tool comprises a channel through which a cooling fluid is guided into the cooling channel of the cutting insert via the inlet of the latter.

According to one embodiment, the cutting insert is characterized in that, in a direction from the cutting edge towards the sidewall surface, the top surface of the tip slopes in a direction towards the lower side of said body.

Further features and advantages of the present invention will be presented in the following detailed description of embodiments.

### BRIEF DESCRIPTION OF THE DRAWING

Fig. 1 is a perspective view of a cutting insert according to an embodiment of the invention,
Fig. 2 is a view from above of the cutting insert in fig. 1,
Fig. 3 is side view of the cutting insert shown in fig. 1,
Fig. 4 is a cross section according to II-II in fig. 2, and
Fig. 5 is a cross section according to III-III in fig. 3.

### DETAILED DESCRIPTION

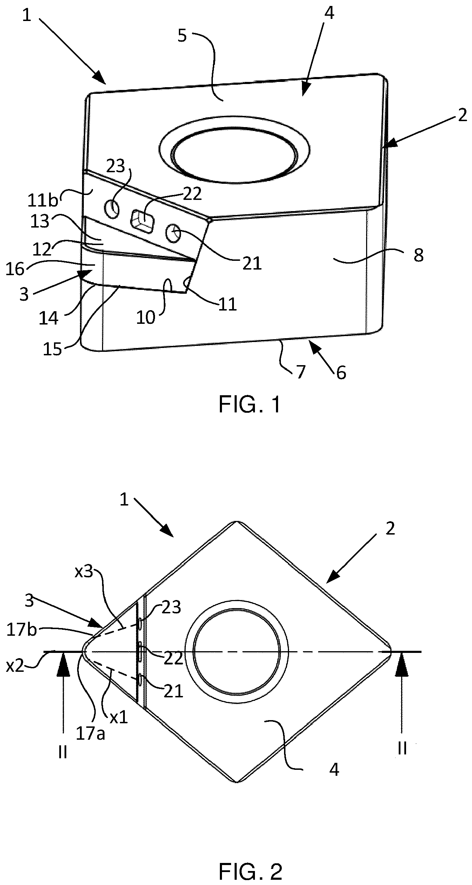

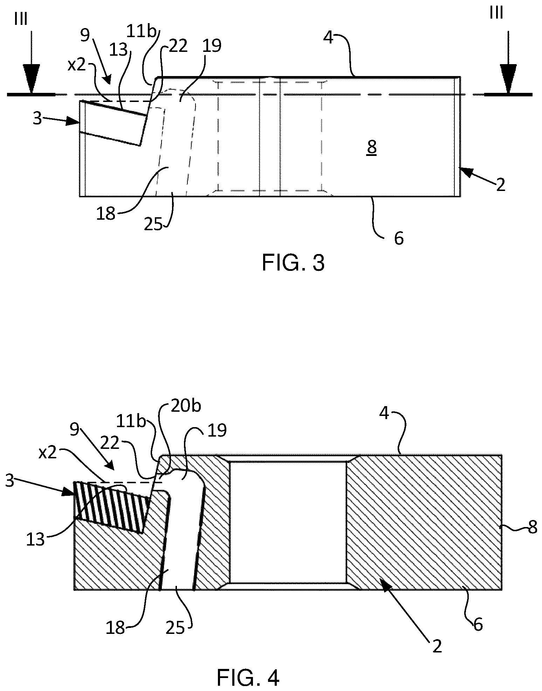

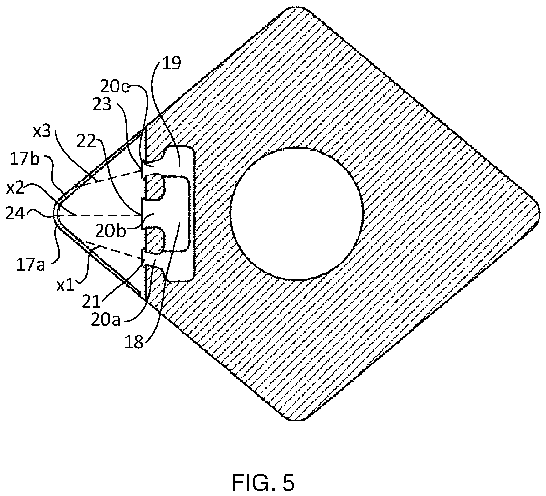

Figs. 1-5 show an embodiment of a cutting insert 1 according to the principles of the present invention. The use of terms such as upper, lower, bottom and top are only for the purpose of defining the geometry of the cutting insert when seen from certain angles. It should be understood that the cutting insert, under operating conditions, may take any suitable position.

The cutting insert 1 is a cutting insert for a cutting tool, preferably for the cutting of metals. The cutting insert comprises a body 2 and a tip 3 attached to the body 2. The body 2 comprises an upper side 4 comprising a top surface 5, a lower side 6 comprising a bottom surface 7, and a peripheral side surface 8 extending between the upper side 4 and the lower side 6. The body 2 further comprises a recess 9 configured for receiving the tip 3. The recess 9 is formed as a steplike setback in a transition between the top surface 5 and the peripheral side surface 8, and is defined by at least a bottom surface 10 and a sidewall surface 11. The upper side 4 and the lower side 6 are generally parallel with each other and perpendicular to a center axis through the cutting insert.

The tip 3 is made of a material different from the material of said body. In the exemplifying embodiment presented here, the body 2 consists of tungsten carbide with a cobalt binder, and the tip 3 consists of polycrystalline diamond PCD, and thus has a higher hardness than the material of the body 2.

The tip 3 comprises an upper side 12 comprising a top surface 13, a lower side 14 comprising a bottom surface 15, and a peripheral side surface 16 extending between the upper side 12 and the lower side 14. An intersection between the top surface 13 and the peripheral side surface 16 defines at least one cutting edge 17a, 17b of the cutting insert 1. The top surface 13 of the tip defines a rake face of the cutting insert 1. In the exemplifying embodiment, in a direction from the cutting edge 17a, 17b towards the sidewall surface 11 of the recess 9, the top surface 13 of the tip 3 slopes in a direction towards the lower side 6 of said body 2. The upper side 12 and the lower side 14 of he tip are essentially parallel to each other. The peripheral surface 16 of the tip 3 is essentially parallel with and in alignement with the adjacent peripheral side surface 8 of the body 2.

The tip 3 is supported by the bottom surface 10 and a first portion of the sidewall surface 11 of the recess 9. The sidewall surface 11 of the recess 9 is remote from said cutting edge 17a, 17b and has a second portion 11b extending in a direction from the top surface 13 of the tip 3 to the upper side 4 of the body 2. The cutting insert 1 further comprises at least one cooling channel 18, 19, 20a, 20b, 20c which extends through said body and which has at least one outlet 21, 22, 23 in said second portion 11b of the sidewall surface 11. The outlets 21, 22, 23 are directed such that a fluid having a pressure above a predetermined minimum pressure and exiting the body through said outlet 21, 22, 23 will be directed towards the top surface 13 of the tip 3.

A center axis x1, x2, x3 of each outlet 21, 22, 23 intersects the top surface 13 of the tip 3. The outlets 21, 22, 23 are directed such that a fluid exiting the body through said outlets is directed towards the cutting edge 17a, 17b on the tip 3.

The tip 3 defines a corner 24 with a first and a second cutting edge 17a, 17b extending from said corner 24. At least one outlet 22 has a center axis x2 pointing towards said corner 24 such that fluid exiting the body 2 through the outlet 22 is directed towards said corner 24.

The cooling channel comprises a first portion 18 having a cross-sectional area A, and a second portion comprising at least two branches, here three branches 20a, 20b, 20c having a respective cross-sectional area aᵢ and extending from the first portion 18 to a respective outlet 21, 22, 23 in said second portion 11b of the wall surface 11 of the recess 9. The cross-sectional area A of said first portion 18 is larger than the sum Σaᵢ of the cross-sectional areas of the branches 20a, 20b, 20c.

The cooling channel also comprises a plenum chamber 19 provided between said first portion 18 and the branches 20a, 20b, 20c.The plenum chamber has a cross-sectional area Apc which is larger than the cross-sectional area A of said first portion 18. The first portion 18 of the cooling channel has in inlet 25 configured to receive a cooling fluid from a cooling fluid source.

The tip 3 is connected to the body 2 by means of brazing. Accordingly, the cutting insert 1 comprises a joint (not visible in the drawing) between the tip 3 and the body 2, said joint being formed by a brazing material. The joint may cover the whole contact surface between the body 2 and the tip 3.

## Claims

1. A cutting insert (1) for a cutting tool, said cutting insert (1) comprising:
- a body (2) and a tip (3) attached to the body (2),
- wherein the body (2) comprises
an upper side (4) comprising a top surface (5), a lower side (6) comprising a bottom surface (7), a peripheral side surface (8) extending between the upper side (4) and the lower side (6), and a recess (9) configured for receiving the tip (3), wherein the recess (9) is formed in a transition between the top surface (5) and the peripheral side surface (8), wherein the recess (9) is defined by at least a bottom surface (10) and a sidewall surface (11),
- wherein the tip (3) is made of a material different from the material of said body (2), and
- wherein said tip (3) comprises an upper side (12) comprising a top surface (13), a lower side (14) comprising a bottom surface (15), and a peripheral side surface (16) extending between the upper side (12) and the lower side (14), and wherein the intersection between the top surface (13) and the peripheral side surface (16) defines at least one cutting edge (17a, 17b) of the cutting insert (1),
- wherein the tip (3) is supported by the bottom surface (10) and a first portion of the sidewall surface (11) of the recess (9), and
- said sidewall surface (11) is remote from said cutting edge (17a, 17b) and has a second portion (11b) extending in a direction from the top surface (13) of the tip (3) to the upper side (4) of the body (2), said cutting insert (1) being **characterized in that** it comprises
- at least one cooling channel (18, 19, 20, 20b, 20c) which extends through said body (2) and which has at least one outlet (21, 22, 23) in said second portion (11b) of the sidewall surface (11), and that the outlet (21, 22, 23) is directed such that a fluid exiting the body (2) through said outlet (21, 22, 23) will be directed towards the top surface (13) of the tip (3).

2. A cutting insert (1) according to claim 1, **characterized in that** a center axis (x1, x2, x3) of the outlet (21, 22, 23) intersects the top surface (13) of the tip (3).

3. A cutting insert (1) according to claim 1 or 2, **characterized in that** said at least one outlet (21, 22, 23) is directed such that a fluid exiting the body (2) through said outlet (21, 22, 23) is directed towards said at least one cutting edge (17a,17b) defined by the tip (3).

4. A cutting insert (1) according to any one of claims 1-3, **characterized in that** said top surface (13) of the tip (3) defines a rake face of the cutting insert (1).

5. A cutting insert (1) according to any one of claims 1-4, **characterized in that** the tip (3) defines a corner (24) with a first and a second cutting edge (17a, 17b) extending from said corner (24), and that at least one outlet (22) has a center axis (x2) pointing towards said corner (24) such that fluid exiting the body (2) through the outlet (22) is directed towards said corner (24).

6. A cutting insert (1) according to any one of claim 1-5, **characterized in that** said cooling channel comprises a first portion (18) having a cross-sectional area A, and a second portion comprising at least two branches (20a, 20b, 20c) having a respective cross-sectional area aᵢ and extending from the first portion (18) to a respective outlet (21, 22, 23) in said second portion (11b) of the sidewall surface (11), and that the cross-sectional area A of said first portion (18) is larger than the sum Σaᵢ of the cross-sectional areas of the branches (20a, 20b, 20c).

7. A cutting insert (1) according to claim 6, **characterized in that** the cooling channel comprises a plenum chamber (19) provided between said first portion (18) and the branches (20a, 20b, 20c), said plenum chamber (19) having a cross-sectional area Apc which is larger than the cross-sectional area A of said first portion (18).

8. A cutting insert (1) according to any one of claims 1-7, **characterized in that** it comprises a joint between the tip (3) and the body (2), said joint being formed by a brazing material.

9. A cutting insert (1) according to any one of claims 1-8, **characterized in that** the material of the tip (3) has a higher hardness than the material of the body (2).

10. A cutting insert (1) according to any one of claims 1-9, **characterized in that** the body (2) comprises cemented carbide.

11. A cutting insert (1) according to any one of claims 1-10, **characterized in that** the tip (3) comprises polycrystalline diamond (PCD) or polycrystalline cubic boron nitride (PcBN).

12. A cutting insert (1) according to any one of claims 1-11, **characterized in that** the at least one cooling channel (18, 19, 20a, 20b, 20c) has in inlet (25) configured to receive a cooling fluid from a cooling fluid source.

13. A cutting insert (1) according to any one of claims 1-12, **characterized in that**, in a direction from the cutting edge (17a, 17b) towards the sidewall surface (11), the top surface (13) of the tip (3) slopes in a direction towards the lower side (6) of said body (2).
